Europäisches Patentamt

European Patent Office

Office européen des brevets

(19)

(11) EP 1 326 104 A1

(12) DEMANDE DE BREVET EUROPEEN

(43) Date de publication:
09.07.2003 Bulletin 2003/28

(51) Int Cl.⁷: $G02B\ 6/16$, $G02B\ 6/34$

(21) Numéro de dépôt: 02293112.5

(22) Date de dépôt: 17.12.2002

(84) Etats contractants désignés:
AT BE BG CH CY CZ DE DK EE ES FI FR GB GR
IE IT LI LU MC NL PT SE SI SK TR
Etats d'extension désignés:
AL LT LV MK RO

(30) Priorité: 03.01.2002 FR 0200040

(71) Demandeur: ALCATEL
75008 Paris (FR)

(72) Inventeurs:
• De Barros, Carlos
92100 Boulogne-Billancourt (FR)

• Labidi, Hedi
75017 Paris (FR)
• Bonnet, Xavier
78470 St Rémy Les Chevreuse (FR)
• Riant, Isabelle
91400 Orsay (FR)

(74) Mandataire: Lamoureux, Bernard et al
Compagnie Financière Alcatel
Département de Propriété Industrielle,
5, rue Noel Pons
92734 Nanterre Cedex (FR)

(54) Filtre optique et procédé de filtrage

(57) L'invention concerne un filtre optique comportant un coupleur (C) comprenant au moins une branche d'entrée et n branches de sortie, ladite branche d'entrée recevant un signal d'entrée dont le spectre présente un peigne (P) de longueurs d'onde périodiquement espacées d'un espacement eP. Chacune des n branches de sortie est couplée à un guide d'onde comportant au moins deux composants à couplage copropagatif disposés en cascade, chacune desdites n branches produisant un signal de sortie dont le spectre présente un peigne (P1 ou P2) de longueurs d'onde périodiquement espacées d'un espacement égal à n fois l'espacement eP, chacun desdits n spectres des signaux de sortie étant complémentaire des autres.

Fig. 3

EP 1 326 104 A1

**Description**

L'invention concerne un filtre optique recevant un signal d'entrée dont le spectre présente un peigne de longueurs d'onde périodiquement espacées.

L'invention a également pour objet un procédé de filtrage.

Le domaine de l'invention est celui des télécommunications optiques et plus particulièrement celui du filtrage optique.

Parmi les dispositifs de filtrage existants, on considère ceux qui permettent de séparer un signal d'entrée dont le spectre présente un peigne P de N longueurs d'onde (portant chacune un signal), en au moins deux signaux de sortie, dont les spectres présentent deux peignes complémentaires P1, P2 de N/2 longueurs d'onde tels que l'espacement en longueur d'onde e, identique pour les deux peignes P1 et P2, est le double de l'espacement eP du peigne P.

Par la suite, on désignera de tels dispositifs de filtrage par le terme anglo-saxon "interleaver". Ils sont notamment utilisés pour le routage des télécommunications optiques.

Plusieurs technologies permettent actuellement de réaliser un "interleaver".

Une première technologie est basée sur l'utilisation d'un démultiplexeur utilisant un réseau formé de guides d'onde, reliant deux coupleurs en étoile ; un tel multiplexeur est souvent désigné par le terme phasar («Phased Arrayed-Waveguide Grating Multiplexer» ou «AWG» en anglais).

Selon cette technologie, les signaux portés par un peigne P de N longueurs d'onde $\lambda_1$, ..., $\lambda_N$ et présentés en entrée au phasar AWG sont séparés en N signaux, portés chacun par une longueur d'onde $\lambda_i$. Les signaux séparés sont ensuite regroupés ou entrelacés en utilisant deux phasars légèrement décalés en période pour constituer les 2 peignes P1 et P2.

Cette technologie introduit cependant des pertes importantes, supérieures à 5 dB.

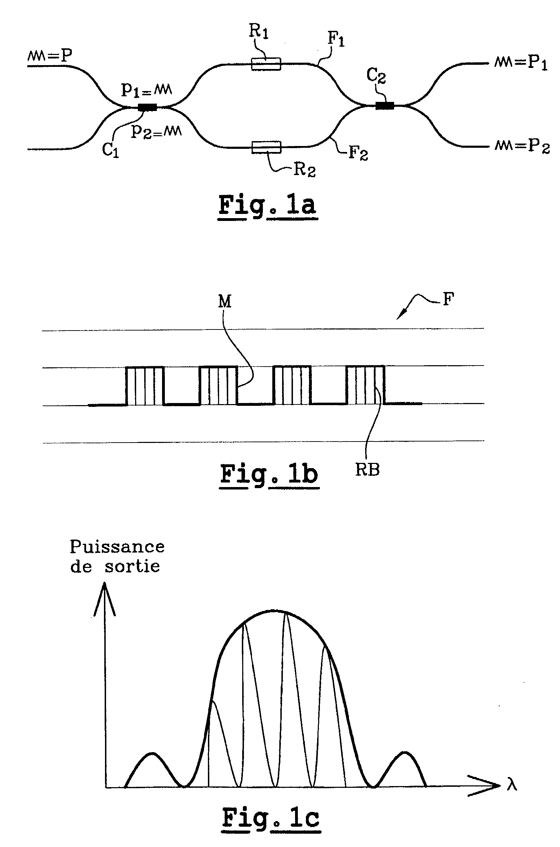

Une autre technologie est basée sur l'utilisation d'un interféromètre de Mach-Zehnder. Comme représenté figure 1a), le peigne P de N longueurs d'onde est divisé au moyen d'un premier coupleur C1 entre deux fibres optiques F1 et F2 introduisant respectivement un retard R1, R2 sur chaque sous-peigne p1, p2 de N longueurs d'onde également mais d'intensité divisée par deux ; les deux fibres F1 et F2 sont recouplées par un coupleur C2 de façon à obtenir des interférences entre les peignes p1 et p2 et permettre ainsi de séparer en deux peignes P1 et P2 le peigne P d'origine ; la période des deux peignes P1 et P2 est alors fonction de la période des interférences.

Cette technologie nécessite d'utiliser deux coupleurs en série alors que pour des raisons de coût, on cherche à réduire l'encombrement et le nombre de composants d'un "interleaver" ; d'autre part la mise en oeuvre d'un tel composant est difficile en terme de reproductibilité.

Une autre technologie consiste à utiliser un circulateur Cr et N réseaux de Bragg $RB_1$,..., $RB_N$ disposés en cascade, chacun des réseaux $RB_i$ filtrant par réflexion une longueur d'onde $\lambda_i$. Un réseau de Bragg est obtenu en inscrivant dans le coeur de la fibre optique un réseau dont le pas détermine la longueur d'onde filtrée. L'inscription de N réseaux de Bragg, chacun des réseaux ayant un pas différent, est difficile à réaliser de manière fiable et reproductible.

On peut également utiliser comme réseaux de Bragg, un réseau échantillonné ("sampled grating" en anglais). Comme représenté figure 1b), ce réseau échantillonné est constitué d'un même réseau de Bragg RB inscrit dans le coeur de la fibre F à travers une fenêtre M : le réseau de Bragg est modulé selon cette fenêtre.

La réponse R de ce réseau échantillonné, représentée figure 1c) est un peigne réflecteur dont l'espacement e en longueur d'onde est fonction de la période de la fenêtre M. La puissance des signaux portés par chacune des longueurs d'onde du peigne obtenu en réponse, varie en fonction de la longueur d'onde. La solution qui consiste à élargir cette enveloppe E afin d'avoir la même puissance pour chacune des longueurs d'onde, a l'inconvénient d'augmenter les pertes sur toute la bande de filtrage. En effet, pour obtenir une enveloppe très large, il faut que la largeur de chaque zone photoinscrite de M soit la plus étroite possible ; il est donc difficile d'atteindre sur des petites zones des réflectivités maximales sans introduire des pertes.

Le but de la présente invention est donc de réaliser un "interleaver" ne présentant pas les inconvénients mentionnés.

L'invention a pour objet un filtre optique comportant un coupleur comprenant au moins une branche d'entrée et n branches de sortie, ladite branche d'entrée recevant un signal d'entrée dont le spectre présente un peigne P de longueurs d'onde périodiquement espacées d'un espacement eP, principalement caractérisé en ce que chacune des n branches de sortie est couplée à un guide d'onde comportant au moins deux composants à couplage copropagatif disposés en cascade, chacune desdites n branches produisant un signal de sortie dont le spectre présente un peigne (P1 ou P2) de longueurs d'onde périodiquement espacées d'un espacement égal à n fois l'espacement eP, chacun desdits n spectres des signaux de sortie étant complémentaire des autres.

Le guide d'onde peut être une fibre optique ou un guide d'onde planaire.

Les composants à couplage copropagatif sont avantageusement des réseaux à long pas.

Le guide d'onde peut être monomode ou multimode.

Les composants à couplage copropagatif présentant chacun une longueur, les longueurs des composants à couplage copropagatif d'un desdits guides d'onde sont de préférence identiques.

Selon une caractéristique additionnelle de l'invention, les guides d'onde présentant sur la portion du guide comportant lesdits composants à couplage copropagatif, un indice de coeur $n_c$ et un indice de gaine $n_g$, lesdits indices $n_c$ et $n_g$ d'un guide d'onde sont identiques à ceux des autres guides d'onde.

L'invention concerne également un procédé de filtrage d'un signal dont le spectre présente un peigne de longueurs d'onde périodiquement espacées, caractérisé en ce qu'il comporte les étapes consistant à :

a) utiliser un filtre optique selon l'une quelconque des revendications précédentes, apte à produire des signaux de sortie,
b) décaler les spectres desdits signaux de sortie les uns par rapport aux autres en ajustant et/ou en accordant au moins l'un desdits composants à couplage copropagatif de chacun des guides d'onde dudit filtre optique.

L'ajustement et/ou l'accordabilité de l'étape b) peut être obtenue en exerçant une contrainte mécanique et/ou thermique sur ledit composant à couplage copropagatif.

Selon une caractéristique de l'invention, chacun des guides d'onde introduisant une différence de chemin optique entre la partie du signal couplée par les composants à couplage copropagatif et l'autre partie dudit signal, il comporte en outre une étape consistant à modifier pour au moins l'un desdits guides d'onde, ladite différence de chemin optique.

Les composants à couplage copropagatif dudit guide d'onde étant séparés d'une distance L, l'étape de modification peut être obtenue en faisant varier la distance L.

Le guide d'onde comportant sur la (ou les) portion(s) séparant lesdits composants à couplage copropagatif, un coeur d'indice $n_c$ et une gaine d'indice ng, lesdits indices correspondant respectivement aux indices effectifs $n_{effc}$ d'un mode de coeur et $n_{effg}$ d'un mode de gaine, l'étape de modification peut aussi être obtenue en faisant varier lesdits indices effectifs $n_{effc}$ et/ou $n_{effg}$.

Selon une caractéristique de l'invention, l'étape de modification est obtenue en exposant à une radiation de type UV, la portion du guide d'onde comprise entre lesdits composants à couplage copropagatif et/ou en exerçant une contrainte thermique sur la portion dudit guide d'onde comprise entre lesdits composants à couplage copropagatif.

D'autres particularités et avantages de l'invention apparaîtront clairement à la lecture de la description faite à titre d'exemple non limitatif et en regard des dessins annexés sur lesquels :

les figures 1a), 1b) et 1c) déjà décrites représentent respectivement de manière schématique un interféromètre de Mach-Zehnder, un réseau de Bragg échantillonné et sa réponse, utilisés pour réaliser un "interleaver" selon l'état de la technique,
la figure 2 représente schématiquement un filtre optique selon l'invention,
la figure 3 représente schématiquement une fibre optique F1 qui comporte deux réseaux à long pas LPG1, LPG2,
la figure 4 représente schématiquement un exemple de peignes P1 et P2 obtenu en utilisant un filtre selon l'invention.

Le filtre optique selon l'invention vise à obtenir à partir d'un peigne P de N longueurs d'onde, m peignes (m>1) dont l'espacement e en longueur d'onde est un multiple de l'espacement eP du peigne P d'origine : e=m*eP.

Chaque peigne peut avoir la même intensité, sachant que leur somme est inférieure ou égale à celle du peigne P d'origine ; elle peut aussi varier d'un peigne à l'autre.

On considère plus particulièrement dans la suite, un filtre optique permettant d'obtenir deux peignes P1, P2 (m=2) dont l'espacement en longueur d'onde est donc le double de celui du peigne P d'origine.

Concernant l'intensité de chaque peigne P1, P2, lorsque par exemple les signaux portés par le peigne P2 doivent parcourir une plus longue distance que ceux portés par le peigne P1, on peut les répartir de façon inégale, par exemple 30% pour P1 et 70% pour P2. Pour simplifier, on considère dans la suite que l'intensité de chaque peigne P1 et P2 est 50% de celle du peigne P d'origine.

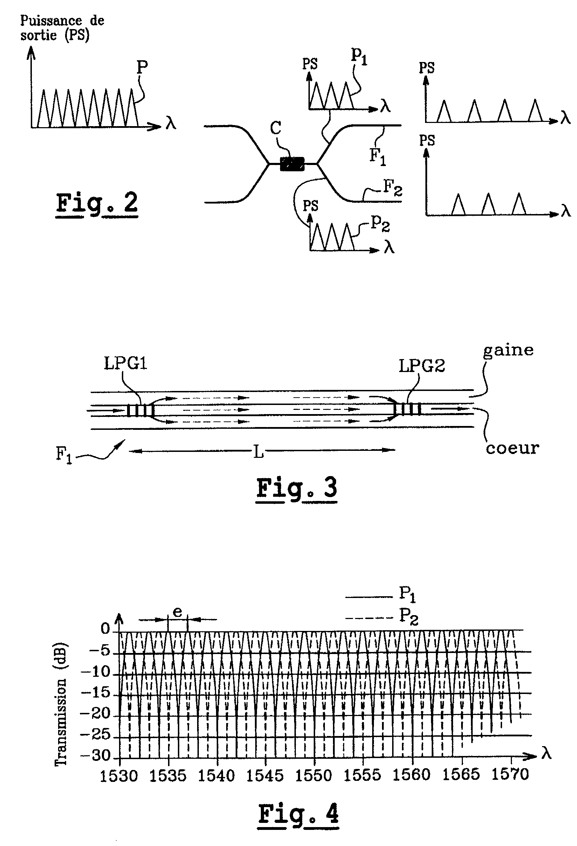

Comme représenté figure 2, le filtre optique selon l'invention comporte un coupleur C pour diviser selon deux branches couplées chacune à un guide d'onde F1, F2, le peigne P en deux sous-peignes p1, p2 de N longueurs d'onde également mais d'intensité divisée par deux.

Le guide d'onde est monomode ou multimode, mais de préférence monomode.

On peut par exemple choisir comme guide d'onde une fibre optique ou un guide d'onde planaire. Dans la suite on considérera plus particulièrement des fibres optiques F1 et F2.

Ainsi que le montre la figure 3 pour la fibre F1, qui correspond à un mode de réalisation préférentiel, chacune de ces fibres optiques comporte au moins deux réseaux à long pas LPG1, LPG2, ("Long Period Grating" ou "LPG" en anglais) disposés en cascade, inscrits dans le coeur et/ou dans la gaine de la fibre optique F1 et séparés d'une distance L comprise entre le début du réseau LPG1 et le début du réseau LPG2.

On rappelle qu'un réseau à long pas est un cas particulier de réseau de Bragg inscrit dans le coeur de la fibre optique. Cependant, alors que le pas d'un réseau de Bragg est généralement de l'ordre de 0.5 μm, celui d'un réseau à long pas peut aller de quelques μm à quel-

ques centaines de µm.

Il en résulte qu'au lieu d'être réfléchi vers l'arrière comme dans le cas d'un réseau de Bragg qui est de ce fait qualifié de contra-propagatif, le signal porté par la longueur d'onde en partie filtrée par le réseau à long pas est en partie couplé dans un mode de gaine vers l'avant ; le réseau à long pas est alors qualifié de co-propagatif. L'indice du revêtement de la gaine est déterminé pour que le mode de gaine soit guidé dans la gaine d'indice ng et non absorbé par le revêtement.

La partie du signal qui n'est pas couplée par le réseau LPG1 dans le mode de gaine se propage le long du coeur de la fibre optique, d'indice $n_c$.

Ces deux chemins optiques le long du coeur d'une part et le long de la gaine d'autre part, forment ainsi les deux bras d'un interféromètre de Mach-Zehnder. Puis, le signal porté par le mode de gaine est recouplé par le deuxième réseau à long pas LPG2 vers le coeur de la fibre, et interfère alors avec le signal transmis le long du coeur de la fibre optique. Il en est ainsi pour chaque longueur d'onde considérée.

Les deux réseaux LPG1 et LPG2 de longueur respective d1 et d2 ont de préférence la même longueur d. Lorsque la distance L est plus grande que la longueur d, les interférences (c'est-à-dire le peigne) obtenues en sortie du réseau LPG2, présentent un espacement e déterminé par :

$$e = \lambda^2/(\Delta m * L) \text{ avec}$$

$\lambda$, la longueur d'onde filtrée,
$\Delta m = (n_{effc} - n_{effg}) - \lambda * \frac{d}{d\lambda}(n_{effc} - n_{effg})$, $n_{effc}$ étant l'indice effectif du mode fondamental se propageant dans le coeur de la fibre lorsqu'il s'agit d'une fibre monomode et $n_{effg}$, l'indice effectif du mode de gaine se propageant dans la gaine G. Lorsqu'il s'agit d'une fibre multimode, il faut considérer les indices effectifs des deux modes guidés considérés se propageant dans le coeur de la fibre ($n_{effc1}$ et $n_{effc2}$).

Ces indices effectifs sont bien sûr ceux correspondant à la portion de fibre comportant les deux réseaux à long pas.

Dans le domaine des télécommunications optiques par exemple transmises sur 32 longueurs d'onde comprises dans la bande C (elle-même comprise entre environ 1530 et 1560 nm), l'espacement eP est égal à 0.8 nm. On tend actuellement à utiliser 64 longueurs d'onde pour la même bande, avec un espacement alors égal à 0.4 nm.

Pour une description plus détaillée de l'espacement entre les franges d'interférence, on se reportera à la publication "Dependence of fringe spacing on the grating separation in a long-period fiber grating pair", de B. Ha Lee et J. Nishii, Applied Optics, Vol.38, N°16, 1 June 1999.

Une courbe de transmission des interférences obtenues est représentée par un trait plein sur la figure 4 : cet exemple de peigne P1 a été obtenu à partir des paramètres suivants.

Différence d'indices de la fibre : $4.10^{-3}$
Mode de gaine considéré : LP03
Longueur d des réseaux LPG1 et LPG2 : 10 mm
Pas du réseau à long pas : 190 µm
Distance D : 50 cm.

Cette courbe de transmission montre que toutes les longueurs d'onde transmises le sont avec la même puissance mais que celles non transmises sont atténuées ou isolées d'une valeur dépendant de la longueur d'onde. La courbe présente une enveloppe (tronquée sur la figure 4) : celle-ci doit être assez large et assez contrastée pour que les longueurs d'onde non transmises soient atténuées (isolées) d'une valeur supérieure à un seuil déterminé. Dans le domaine des télécommunications optiques par exemple, ce seuil doit être supérieur à environ 25dB.

De la même façon, la fibre F2 comporte deux réseaux à long pas LPG1 et LPG2, de préférence identiques entre eux comme on l'a vu pour la fibre F1. Les réseaux LPG1 et LPG2 de la fibre F2 sont conçus de façon à produire le même système de franges que celui obtenu au moyen des réseaux LPG1 et LPG2 de la fibre F1, mais décalé pour obtenir un peigne P2 complémentaire du peigne P1. Les N longueurs d'onde du peigne P2 sont légèrement décalées par rapport à celles du peigne P1 : le décalage est de l'ordre de eP.

La fibre F2 dont les indices du coeur $n_c$ et de la gaine ng sont de préférence identiques à ceux de la fibre F1, comporte des réseaux LPG1 et LPG2 de préférence séparés de la même distance L et identiques deux à deux à ceux de la fibre F1. Et le décalage spectral est obtenu en ajustant et/ou en accordant le réseau LPG1 et/ou LPG2 de la fibre F2 (ou F1 ou les deux).

L'ajustement est réalisé de manière définitive, par exemple pour se conformer au cahier des charges au moment de l'installation du filtre dans le système optique auquel il est destiné.

L'accordabilité est réalisée de manière dynamique au cours du fonctionnement du filtre, par exemple pour corriger une dérive fréquentielle due au vieillissement du filtre ou lorsque l'on modifie le nombre de longueurs d'onde de transmission du système optique.

Le décalage spectral peut être obtenu en exerçant par exemple une contrainte mécanique et/ou thermique sur le réseau LPG1 et/ou LPG2 de la fibre F2 (ou F1 ou les deux).

Un peigne P2 est représenté figure 4 par un trait en pointillé. Il a été obtenu à partir d'une fibre F2, comportant des réseaux LPG1 et LPG2 identiques à ceux de la fibre F1 et séparés de la même distance L. Et le décalage spectral a été obtenu en chauffant le LPG1 de la fibre F2.

Selon le mode de réalisation décrit en relation avec les figures 3 et 4, chacune des fibres comporte au moins deux réseaux à long pas LPG1 et LPG2. Mais l'invention ne se limite pas seulement à un filtre optique comportant des réseaux à long pas ; elle s'applique plus généralement à tout filtre optique comportant au moins deux composants à couplage copropagatif aptes à coupler dans un seul mode une partie du signal reçu et que l'on désigne pour simplifier par composants à couplage copropagatif.

Le filtre optique selon l'invention présente l'avantage de réaliser le filtrage avec peu de pertes (celles-ci proviennent seulement du coupleur) ; en outre, ces pertes ne dépendent pas de la longueur d'onde.

Un tel filtre, facile et peu coûteux à réaliser est alors très bien adapté à une production de masse.

La différence de chemin optique entre la partie du signal couplée par les composants à couplage copropagatif et l'autre partie du signal, peut être modifiée pour modifier l'espacement des franges du filtre optique selon l'invention sur une ou plusieurs branches du filtre voire sur toutes.

Comme pour le décalage spectral, cet espacement peut être obtenu par ajustement et/ou par accordabilité.

Pour diminuer l'espacement e, il suffit d'augmenter la distance L entre les deux réseaux.

Une autre solution consiste à augmenter (ou diminuer) Δm en faisant varier sur la portion de fibre comprise entre les réseaux LPG1 et LPG2, les indices effectifs du mode de coeur et/ou du mode de gaine. Ces variations peuvent être réalisées thermiquement ou par contrainte mécanique.

Ces deux solutions peuvent être réalisées de manière définitive ou dynamique.

L'espacement des franges peut aussi être modifié de la façon suivante : en exposant par exemple de manière spécifique à une irradiation UV uniforme la portion de fibre comprise entre les deux réseaux, il est possible de changer la différence de chemin optique.

**Revendications**

1. Filtre optique comportant un coupleur (C) comprenant au moins une branche d'entrée et n branches de sortie, ladite branche d'entrée recevant un signal d'entrée dont le spectre présente un peigne (P) de longueurs d'onde périodiquement espacées d'un espacement eP, **caractérisé en ce que** chacune des n branches de sortie est couplée à un guide d'onde comportant au moins deux composants à couplage copropagatif disposés en cascade, chacune desdites n branches produisant un signal de sortie dont le spectre présente un peigne (P1 ou P2) de longueurs d'onde périodiquement espacées d'un espacement égal à n fois l'espacement eP, chacun desdits n spectres des signaux de sortie étant complémentaire des autres.

2. Filtre optique selon la revendication 1, **caractérisé en ce que** ledit guide d'onde est une fibre optique (F1 ou F2) ou un guide d'onde planaire.

3. Filtre optique selon l'une quelconque des revendications précédentes, **caractérisé en ce que** lesdits composants à couplage copropagatif sont des réseaux à long pas (LPG1, LPG2).

4. Filtre optique selon l'une quelconque des revendications précédentes, **caractérisé en ce que** ledit guide d'onde est monomode ou multimode.

5. Filtre optique selon l'une quelconque des revendications précédentes, **caractérisé en ce que** lesdits composants à couplage copropagatif présentant chacun une longueur, les longueurs des composants à couplage copropagatif d'un desdits guides d'onde sont identiques.

6. Filtre optique selon l'une quelconque des revendications précédentes, **caractérisé en ce que** lesdits guides d'onde présentant sur la portion du guide comportant lesdits composants à couplage copropagatif, un indice de coeur $n_c$ et un indice de gaine $n_g$, lesdits indices $n_c$ et ng d'un guide d'onde sont identiques à ceux des autres guides d'onde.

7. Procédé de filtrage d'un signal dont le spectre présente un peigne de longueurs d'onde périodiquement espacées, **caractérisé en ce qu'**il comporte les étapes consistant à :

   a) utiliser un filtre optique selon l'une quelconque des revendications précédentes, apte à produire des signaux de sortie,
   b) décaler les spectres desdits signaux de sortie les uns par rapport aux autres en ajustant et/ou en accordant au moins l'un desdits composants à couplage copropagatif de chacun des guides d'onde dudit filtre optique.

8. Procédé de filtrage selon la revendication 7, **caractérisé en ce que** l'ajustement et/ou l'accordabilité de l'étape b) est obtenue en exerçant une contrainte mécanique et/ou thermique sur ledit composant à couplage copropagatif.

9. Procédé de filtrage selon l'une quelconque des revendications 7 ou 8, **caractérisé en ce que** chacun desdits guides d'onde introduisant une différence de chemin optique entre la partie du signal couplée par lesdits composants à couplage copropagatif et l'autre partie dudit signal, il comporte en outre une étape consistant à modifier pour au moins l'un desdits guides d'onde, ladite différence de chemin optique.

**10.** Procédé de filtrage selon la revendication 9, **caractérisé en ce que** lesdits composants à couplage copropagatif dudit guide d'onde étant séparés d'une distance L, l'étape de modification est obtenue en faisant varier ladite distance L.

**11.** Procédé de filtrage selon l'une quelconque des revendications 9 ou 10, **caractérisé en ce que** ledit guide d'onde comportant sur la (ou les) portion(s) séparant lesdits composants à couplage copropagatif, un coeur d'indice $n_c$ et une gaine d'indice $n_g$, lesdits indices correspondant respectivement aux indices effectifs $n_{effc}$ d'un mode de coeur et $n_{effg}$ d'un mode de gaine, l'étape de modification est obtenue en faisant varier lesdits indices effectifs $n_{effc}$ et/ou $n_{effg}$.

**12.** Procédé de filtrage selon l'une quelconque des revendications 9 à 11, **caractérisé en ce que** ladite étape de modification est obtenue en exposant à une radiation de type UV, la portion dudit guide d'onde comprise entre lesdits composants à couplage copropagatif.

**13.** Procédé de filtrage selon l'une quelconque des revendications 9 à 12, **caractérisé en ce que** ladite étape de modification est obtenue en exerçant une contrainte thermique sur la portion dudit guide d'onde comprise entre lesdits composants à couplage copropagatif.

$M=P$   $R_1$   $F_1$   $C_2$   $M=P_1$

$P_1=M$

$P_2=M$

$C_1$   $R_2$   $F_2$   $M=P_2$

## Fig. 1a

M   F

RB

## Fig. 1b

Puissance
de sortie

$\lambda$

## Fig. 1c

Puissance de
sortie (PS)

P

**Fig. 2**

PS

p₁

λ

PS

p₂

λ

C

F₁

F₂

PS

λ

PS

λ

LPG1

LPG2

gaine

F₁

L

coeur

**Fig. 3**

P₁

P₂

e

Transmission (dB)

0

-5

-10

-15

-20

-25

-30

1530 1535 1540 1545 1550 1555 1560 1565 1570 λ

**Fig. 4**

**Office européen des brevets**

# RAPPORT DE RECHERCHE EUROPEENNE

Numéro de la demande

EP 02 29 3112

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | CN 1 289 055 A (UNIV QINGHUA) 28 mars 2001 (2001-03-28) & WO 02 37141 A (CHEN XIANGFEI; UNIV TSINGUA(CN); FAN CHONGCHENG (CN); LI XUHUI ()) 10 mai 2002 (2002-05-10) * page 1, ligne 19 - page 2, ligne 22 * * page 3, ligne 6 - page 4, ligne 16 * * figure 1 * --- | 1,2,4 | G02B6/16 G02B6/34 |
| A | GU X J: "WAVELENGTH-DIVISION MULTIPLEXING ISOLATION FIBER FILTER AND LIGHT SOURCE USING CASCADED LONG-PERIOD FIBER GRATINGS" OPTICS LETTERS, OPTICAL SOCIETY OF AMERICA, WASHINGTON, US, vol. 23, no. 7, 1 avril 1998 (1998-04-01), pages 509-510, XP000754690 ISSN: 0146-9592 * le document en entier * ----- | 1-13 | |

**DOMAINES TECHNIQUES RECHERCHES (Int.Cl.7)**

G02B

Le présent rapport a été établi pour toutes les revendications

| Lieu de la recherche | Date d'achèvement de la recherche | Examinateur |
|---|---|---|
| LA HAYE | 27 mars 2003 | Reville, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 3112

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2003

| Document brevet cité<br>au rapport de recherche | Date de<br>publication | Membre(s) de la<br>famille de brevet(s) | Date de<br>publication |
|---|---|---|---|
| CN 1289055 A | 28-03-2001 | AU 2146602 A<br>WO 0237141 A2 | 15-05-2002<br>10-05-2002 |

Pour tout renseignement concernant cette annexe : voir Journal Officiel de l'Office européen des brevets, No.12/82